# EUROPÄISCHE PATENTANMELDUNG

(11) **EP 3 153 018 A1**
(43) Veröffentlichungstag der Anmeldung: **12.04.2017**
(21) Anmeldenummer: 16187368.2
(22) Anmeldetag: 06.09.2016
(51) Int. Cl.: A01K 51/00

(54) **BIENENBEUTE SOWIE ZUSATZMODUL FÜR EINE BIENENBEUTE**

(30) Priorität: 07.10.2015 DE 102015117102
(71) Anmelder: Sachs, Roland, 51491 Overath (DE); Schiffer, Torben, 21629 Neu Wulmsdorf (DE)
(72) Erfinder: Sachs, Roland, 51491 Overath (DE); Schiffer, Torben, 21629 Neu Wulmsdorf (DE)
(74) Vertreter: Freischem & Partner Patentanwälte mbB

(57) **Zusammenfassung**

Die Erfindung betrifft eine Bienenbeute (10) sowie ein Zusatzmodul (34) für eine Bienenbeute. Eine erfindungsgemäße Bienenbeute (10) umfasst einen durch mindestens eine Umfangswand (14) begrenzten Aufnahmeraum (12) zur Anordnung von Bienenwaben. Unabhängig von der geometrischen Außenform der Bienenbeute (10) ist bei einer erfindungsgemäßen Bienenbeute
a) in dem Aufnahmeraum (12) im Bereich der Bienenwaben,
b) in der mindestens einen Umfangswand (14) selbst und/oder
c) an die mindestens eine Umfangswand (14) außen angrenzend
ein für Bienen zugänglich gestalteter Funktionsraum (24) ausgebildet, der so gestaltet ist, dass er zumindest teilweise mit einem Füllmaterial derart befüllbar ist, dass das Füllmaterial in dem Funktionsraum (24) verbleibt und die Bienen dennoch Zugang zu dem mit Füllmaterial befüllbaren Bereich erhalten.

## Beschreibung

Die Erfindung betrifft eine Bienenbeute sowie ein Zusatzmodul für eine Bienenbeute. Unter einer Bienenbeute wird vorliegend ein von einem Imker zur Verfügung gestellter Lebensraum für Bienen bezeichnet, der es den Bienen ermöglicht, Bienenwaben und Wabenzellen selbst vollständig oder teilweise zu bauen, um dort insbesondere Brut und Honig anzulegen. Weit verbreitet sind aktuell sogenannte Magazinbeuten, die im Wesentlichen aus einem meist quaderförmig ausgebildeten Gehäuse mit einem innenseitigen Aufnahmeraum bestehen. In den Aufnahmeraum werden von der Oberseite aus sogenannte Wabenrähmchen parallel zueinander ausgerichtet eingehängt oder einfache Holzleisten mit Wabenansätzen parallel zueinander ausgerichtet von oben auf die Umfangswände des Aufnahmeraumes aufgelegt. Der Begriff "Bienenbeute" soll vorliegend nicht nur Magazinbeuten, sondern auch anders gestaltete Beuten umfassen. Die Erfindung ist aber besonders gut bei Magazinbeuten anwendbar und wird im Folgenden auch anhand von Magazinbeuten beschrieben.

Ein seit Jahrzehnten bekannter Schädling für Bienen ist die sogenannte Varroamilbe. Dabei handelt es sich um einen Parasiten, der sich zum einen an die Bienen selbst klammert und zum anderen seine eigene Brut zeitgleich in denselben Wabenzellen ansiedelt wie die Bienen. Es ist bekannt, dass Varroamilben in einer Bienenbeute, insbesondere wenn die Zahl der Varroamilben hoch ist, das Bienenvolk belastet und an einer gesunden Fortpflanzung hindert. Der Befall von Bienenvölkern durch Varroamilben wird heute als Varroose bezeichnet und wurde in der Vergangenheit als Varroatose bezeichnet.

In DE 35 15 851 A1 ist eine Magazinbeute beschrieben, in welcher zur Eindämmung der Varroose Nützlinge wie Bücherskorpione in ein am Boden der Magazinbeute angelegtes Biotop eingesetzt werden sollen. Der Zugang von Bienen zu dem Biotop soll mittels Drahtgaze und Glasscheiben verhindert werden, damit die Nützlinge bei ihrer Fortpflanzung nicht durch den Putztrieb der Bienen gestört werden.

Auf der Internetseite http://beenature-proiect.com/, aufgerufen am 07.10.2015, sind weitere, allgemein gehaltene Informationen hinsichtlich des Zusammenlebens von Bienen und Bücherskorpionen zu finden. Eine konkrete Bauanleitung für eine Bienenbeute, mittels welcher der Varroose effizient entgegengewirkt werden kann, ist dieser Quelle nicht zu entnehmen.

Der Erfindung liegt die Aufgabe zugrunde, eine Bienenbeute sowie ein Zusatzmodul für eine Bienenbeute zur Verfügung zu stellen, mittels welchen der Varroose besonders effizient entgegengewirkt werden kann.

Die Lösung der Aufgabe erfolgt erfindungsgemäß mit den Merkmalen der unabhängigen Ansprüche. Weitere vorteilhafte Ausführungsformen und Vorteile der Erfindung sind in Verbindung mit den abhängigen Ansprüchen beschrieben.

Eine erfindungsgemäße Bienenbeute umfasst einen durch mindestens eine Umfangswand begrenzten Aufnahmeraum zur Anordnung von Bienenwaben. Dabei weist die Bienenbeute im Falle einer kugelförmigen Gestaltung genau eine Umfangswand auf, die gleichzeitig auch integral einen Bodenbereich und einen Deckbereich umfasst. Bei quaderförmigen Gestaltungen sind üblicherweise vier senkrecht zueinander angeordnete Umfangswände sowie eine Bodenwand und eine Deckwand ausgebildet. Es wird darauf hingewiesen, dass die Erfindung auch mit anderen als den vorstehend beispielhaft beschriebenen geometrischen Gestaltungen von Bienenbeuten realisierbar ist. Unabhängig von der geometrischen Außenform der Bienenbeute ist bei einer erfindungsgemäßen Bienenbeute
a) in dem Aufnahmeraum im Bereich der Bienenwaben,
b) in der mindestens einen Umfangswand selbst und/oder
c) an die mindestens eine Umfangswand außen angrenzend
ein für Bienen zugänglich gestalteter Funktionsraum ausgebildet, der so gestaltet ist, dass er zumindest teilweise mit einem Füllmaterial derart befüllbar ist, dass das Füllmaterial in dem Funktionsraum verbleibt und die Bienen dennoch Zugang zu dem mit Füllmaterial befüllbaren Bereich erhalten. Unter einem solchen Funktionsraum sind insbesondere kammerartig ausgebildete Bereiche zu verstehen, die dazu geeignet sind mit Stroh, Heu oder sonstigen - vorzugsweise natürlichen - Füllstoffen befüllt zu werden.

Zur Variante a) wird zunächst darauf verwiesen, dass die Ortsangabe "im Bereich der Bienenwaben" sich vor allem auf das "Höhenniveau" des Funktionsraumes innerhalb des Aufnahmeraumes bezieht. Zwischen den Bienenwaben und dem Boden einer Bienenbeute verbleibt meist ein gewisser Abstand. Der Funktionsraum soll gemäß Variante a) daher vorzugsweise beabstandet zum Boden angeordnet sein bzw. soll sich zumindest nach oben bis in den Bereich der Bienenwaben erstrecken, so dass der Funktionsraum sich zumindest teilweise auf dem gleichen Höhenniveau befindet wie die Bienenwaben. Besonders bevorzugt ist es, wenn beabstandet zum Boden zumindest teilweise auf gleichem Höhenniveau wie benachbarte Bienenwaben mindestens ein Funktionsraum angeordnet ist.

Zur Variante a) wird weiter insbesondere auf die Möglichkeit verwiesen, anstelle einer Bienenwabe oder mehrerer Bienenwaben, die bei Magazinbeuten üblicherweise in einem sogenannten Wabenrähmchen angeordnet sind, einen Funktionsraum anzuordnen. Ein solcher Funktionsraum kann bei einer Magazinbeute insoweit ebenfalls in einem Rahmen angeordnet werden, welcher die gleiche Dicke wie oder eine größere Dicke als ein für eine Magazinbeute vorgesehenes Wabenrähmchen aufweist, wobei mit der Dicke vorliegend die Erstreckungsrichtung quer zur Ausrichtung der Wabenebenen gemeint ist. Vorzugsweise wird als Breite eines Rahmens mit einem Funktionsraum in diesem Fall ein Vielfaches der Breite eines Wabenrähmchens gewählt (z.B. das 2-fache, 3-fache oder 4-fache), so dass ein Rahmen mit Funktionsraum den Platz von zwei, drei oder mehr Wabenrähmchen einnimmt.

Zur Variante b) wird insbesondere auf die Möglichkeit verwiesen, in einer Umfangswand einen Hohlraum vorzusehen, der dazu vorgesehen ist, mit Stroh, Heu oder sonstigen - vorzugsweise natürlichen - Füllstoffen befüllt zu werden.

Zu Variante c) wird insbesondere auf die Möglichkeit verwiesen, bekannte Bienenbeuten, bei welchen sich die Umfangswände üblicherweise in kleiner Entfernung zu den Bienenwaben anschließen (der Abstand von den Bienenwaben bzw. der Außenseiten von Wabenrähmchen zur Innenseite der Umfangswände beträgt meist nur 1 mm bis 20 mm, insbesondere 2 mm bis 10 mm, bevorzugt 3 mm bis 8 mm), mit mindestens einer Durchgangsöffnung zu versehen. An diese Durchgangsöffnung kann dann außen angrenzend ein Zusatzmodul angeordnet werden, das einen eigenen Funktionsraum aufweist, der - wie die vorstehend beschriebenen Funktionsräume - dazu vorgesehen ist, mit Stroh, Heu oder sonstigen - vorzugsweise natürlichen - Füllstoffen befüllt zu werden.

Durch Versuche wurde herausgefunden, dass bei allen vorstehend beschriebenen Varianten der jeweilige Funktionsraum nicht nur sehr gut zur Ansiedlung von Bücherskorpionen geeignet ist, sondern aufgrund der Anordnung der Funktionsräume innerhalb der Bienenbeute und der Möglichkeit einer bestimmungsgemäßen Anordnung von Füllmaterial innerhalb der Bienenbeute die Varroose effizienter bekämpft werden kann als mit bisher bekannten Beutekonstruktionen. Dies wurde mit Hilfe anerkannter Verfahren zur Ermittlung des Varroamilbenbefallsgrades verifiziert, insbesondere durch Anwendung des bienenschonenden Verfahrens der sogenannten Puderzuckermethode. Mit erfindungsgemäß gestalteten Bienenbeuten wurden in aus den Bienenbeuten entnommenen Bienen-Probemengen signifikant weniger Varroamilben gefunden als in Bienen-Probemengen, die aus anderen aus dem Stand der Technik bekannten Bienenbeuten stammen. Mit bestimmten Gestaltungen wurden bei einigen Bienen-Probemengen sogar überhaupt keine Varroamilben gefunden.

Die Ansiedlung von Bücherskorpionen wird durch die Wahl des Füllmaterials weiter begünstigt. Bevorzugt werden Füllstoffe verwendet, die dem Bücherskorpion eine natürliche Lebensumgebung bieten, wie Stroh oder Heu oder weitere natürliche Füllstoffe. Da sich Bücherskorpione unter anderem von der Varroamilbe ernähren, führt eine vermehrte Ansiedlung von Bücherskorpionen zu einer verstärkten Reduzierung von Varroamilben.

In einer weiteren praktischen Ausführungsform einer erfindungsgemäßen Bienenbeute weist die Bienenbeute ein Flugloch auf, welches den Aufnahmeraum mit der Umgebung verbindet. Ferner ist bei einer solchen Bienenbeute der Funktionsraum in der dem Flugloch zugewandten Hälfte der Bienenbeute angeordnet. Eine solche Anordnung ist insoweit von Vorteil, als in der dem Flugloch zuwandten Hälfte einer Bienenbeute üblicherweise der Brutraum von Bienenvölkern angeordnet ist. In dem Bereich des Brutraumes ist es insoweit von Vorteil, dass die dort befindlichen Bienen von Varroamilben befreit werden, als dann auch die Zahl der Varroamilben, welche sich im Bereich des Brutraumes befinden, reduziert werden kann. Durch die Anordnung eines Funktionsraumes in dem Brutraum oder in örtlicher Nähe zum Brutraum kann die Zahl der Varroamilben dort, wo diese sich vermehren, effizient reduziert werden, und die Bedingungen für die Fortpflanzung des in der Bienenbeute lebenden Bienenvolkes können dadurch verbessert werden. Sofern aus Platzgründen oder aus sonstigen Gründen die Anordnung des Funktionsraumes auf einen bestimmten Bereich einer Bienenbeute beschränkt werden soll, ist es daher bevorzugt, den Funktionsraum in der dem Flugloch zugewandten Hälfte der Bienenbeute und somit in örtlicher Nähe zum Brutraum anzuordnen. Ein weiterer Aspekt, der in Verbindung mit der Anordnung eines Funktionsraumes im Brutraum oder in örtlicher Nähe des Brutraumes genutzt werden kann, ist die Beobachtung, dass Bienen in örtlicher Nähe des Brutraumes besonders empfindlich auf Zugluft reagieren. Wenn Zugluft in Form eines Belüftungspfades insoweit gezielt durch den Brutraum und einen Funktionsraum in die Umgebung geleitet wird, werden die Bienen bestrebt sein, den Funktionsraum aufzusuchen, um dort vorhandene Öffnungen, die in die Umgebung führen, mit Propolis zu verschließen. Die Bienen werden so durch die Beutekonstruktion motiviert, als Lebensraum für die Bücherskorpione ausgelegte Funktionsräume aufzusuchen. Die Bücherskorpione können dies nutzen, indem sie die Bienen von den Varroamilben befreien.

Es wird darauf hingewiesen, dass ein Funktionsraum auch im Bereich des Fluglochs selbst angeordnet sein kann, insbesondere derart, dass Bienen, die von dem Aufnahmeraum einer Bienenbeute in die Umgebung oder von der Umgebung in den Aufnahmeraum gelangen möchten, zwangsläufig den Funktionsraum durchqueren müssen. Dazu können ein oder mehrere Funktionsräume an eine oder mehrere das Flugloch umgebenden Wänden angrenzen, z.B. an die Bodenwand, eine oder mehrere Seitenwände und/oder die Deckwand des Fluglochs. In den an das Flugloch angrenzenden Bereichen können auch Begrenzungsstrukturen angeordnet sein. Alternativ oder in Ergänzung können Füllmaterialien, insbesondere Strohhalme, aus den angrenzenden Funktionsräumen in das Flugloch hineinragend angeordnet sein, um einen direkten Kontakt zwischen Bienen und Bücherskorpionen zu fördern und zu intensivieren. Nur bespielhaft wird insoweit auf ein Flugloch verwiesen, das sich über mehr als 50 Prozent der Breite einer Umfangswand einer Bienenbeute erstreckt, vorzugsweise über die gesamte Breite, das nur eine geringe Höhe aufweist, insbesondere 5 mm bis 20 mm, vorzugsweise 8 bis 12 mm, und sich über eine Tiefe von 5 cm bis 30 cm, vorzugsweise 10 cm bis 15 cm, durch eine zumindest teilweise als Funktionsraum ausgebildete Umfangswand der Bienenbeute erstreckt.

In einer weiteren praktischen Ausführungsform einer erfindungsgemäßen Bienenbeute ist der Funktionsraum durch einen Hohlraum gebildet, der zumindest an einer zu dem Aufnahmeraum gerichteten Seite mit einer für Bienen zugänglichen Begrenzungsstruktur versehen ist. Als Begrenzungsstruktur geeignet sind insbesondere gitterartig ausgebildete Strukturen sowie sonstige Strukturen, welche den Durchtritt zumindest in einer Richtung auf ein bestimmtes Maß begrenzen. Insbesondere wird diesbezüglich auf Begrenzungsstrukturen verwiesen, welche (wie bei parallel gespannten Drähten) im Wesentlichen die Breite oder (wie bei Maschen) die Breite und die Höhe begrenzen, insbesondere auf Maße zwischen 4 mm und 30 mm. Bevorzugt sind Begrenzungen auf Maße von 5 mm, 10 mm oder 15 mm. Unter dem angegebenen Maß ist jeweils die maximale Durchtrittsbreite zu verstehen, d.h. bei viereckigen Maschen ist die Länge der jeweils größten Diagonalen gemeint. Die genannten Begrenzungsstrukturen ermöglichen einerseits einen Durchtritt für Bienen in den Funktionsraum, andererseits wird ein in dem Funktionsraum angeordnetes Füllmaterial, insbesondere Stroh, Heu oder ein sonstiges - vorzugsweise natürliches - Füllmaterial, in dem Funktionsraum derart gehalten, dass auch bei Krafteinwirkung von den Bienen und Bücherskorpionen auf das Stroh dieses im Wesentlichen im Funktionsraum verbleibt. Neben den bereits erwähnten Gittern sind als Begrenzungsstrukturen insbesondere auch gespannte Fäden, Drähte oder sonstige Begrenzungsstrukturen geeignet, die die vorstehend beschriebene Funktion erfüllen.

Besonders gute Ergebnisse hinsichtlich der Bekämpfung der Varroose in erfindungsgemäßen Bienenbeuten werden erzielt, wenn der Funktionsraum Teil eines Belüftungspfades ist, welcher sich von einer Unterseite der Bienenbeute durch den Funktionsraum hindurch bis zumindest einer in der oberen Hälfte oder oberhalb des Funktionsraumes angeordneten Entlüftungsöffnung erstreckt. Derartige Entlüftungsöffnungen werden vorzugsweise in der oberen Hälfte des jeweiligen Funktionsraumes selbst angeordnet. Durch Versuche wurde ermittelt, dass ein solcher Belüftungspfad durch einen Funktionsraum dazu führt, dass permanent Bienen aus dem Aufnahmeraum den Funktionsraum aufsuchen und im Bereich der Entlüftungsöffnung versuchen, durch Aussondern von Propolis diese zumindest teilweise zu verschließen.

Als vorteilhaft hat sich erwiesen, wenn die Belüftungsfläche, d.h. die Summe der Flächen aller Entlüftungsöffnungen, welche im oberen Bereich einer Bienenbeute angeordnet sind, zwischen 0,5 cm² und 100 cm² beträgt. Besonders vorteilhaft beträgt die Belüftungsfläche zwischen 30 cm² und 60 cm². Hervorragende Ergebnisse wurden mit einer Belüftungsfläche von 50 cm² erzielt. Diese Belüftungsfläche wurde durch Ausbildung von kreisförmigen Entlüftungsöffnungen in der Oberseite der Umfangswände erzielt, wobei unmittelbar unterhalb der Umfangswände für Bienen zugängliche Funktionsräume angeordnet waren.

Als Lufteintrittsfläche dient bei einem in der Praxis getesteten Prototyp - neben dem obligatorischen Flugloch - der Boden der Bienenbeute im Bereich des Aufnahmeraumes. Dieser besteht aus einem ca. 10-14 cm dick mit Stroh bedeckten Gitter. Möglich ist es auch, eine nur geringe Dicke von Stroh am Boden anzuordnen, z.B. eine ca. 1 cm dicke Schicht. Ebenfalls möglich ist es, auf Stroh oder ein anderes Füllmaterial im Bereich des Bodens zu verzichten und den Boden auf andere geeignete Art und Weise unzugänglich für kleine Nagetiere, aber gleichzeitig ausreichend luftdurchlässig und isolierend zu gestalten. Die Lufteintrittsfläche im Bereich des Bodens ist im Fall des oben genannten Prototyps ca. 3.300 cm² groß (resultierend aus einer Länge des Aufnahmeraumes von ca. 73 cm und einer Breite von ca. 45 cm). Dies entspricht dem 66-fachen der Entlüftungsfläche (Faktor). Es wird davon ausgegangen, dass ein Faktor zwischen 25 und 100 zwischen Entlüftungsfläche und Lufteintrittsfläche besonders geeignet ist, um die Varroose effizient in der vorliegend beschriebenen Art zu bekämpfen und den Energiebedarf der Bienen zur Temperierung der Bienenbeute nicht allzu hoch werden zu lassen.

Der Vollständigkeit halber wird darauf hingewiesen, dass der Boden auch geschlossen ausgebildet sein kann. In diesem Fall muss eine Belüftung der Bienenbeute auf eine andere geeignete Art und Weise sichergestellt werden, beispielsweise indem Zuluft ausschließlich über ein Flugloch (oder mehrere Fluglöcher) in die Bienenbeute gelangt und Abluft über Öffnungen in der gegenüberliegenden Seite der Bienenbeute möglichst weit oben in der Bienenbeute ausströmt (z.B. im oberen Bereich von Wabenrähmchen).

Es ist bevorzugt, wenn die Entlüftungsöffnungen selbst entweder so klein ausgebildet sind, dass die Bienen durch diese Entlüftungsöffnungen nicht aus der Bienenbeute austreten können (z.B. Durchmesser kleiner als 4 mm, vorzugsweise kleiner 3 mm und besonders bevorzugt kleiner 2 mm oder kleiner 1 mm). Alternativ können in einer ebenfalls bevorzugten Ausführungsform größere Entlüftungsöffnungen ausgebildet sein (z.B. Durchmesser 20 mm, 30 mm oder 40 mm), welche weiter bevorzugt mittels einer Sperrstruktur versehen sind, um zu verhindern, dass die Bienen durch die Entlüftungsöffnung von dem Funktionsbereich direkt in die Umgebung, d.h. den Bereich außerhalb der Bienenbeute, gelangen können. Als eine solche Sperrstruktur sind insbesondere Propolisgitter oder sonstige, ähnlich wirkende Strukturen geeignet. Die Abstände solcher Strukturen sind vorzugsweise kleiner als 3,5 mm. Als besonders geeignet haben sich Abstände von 3 mm, 2 mm oder 1,5 mm erwiesen. Eine solche Anordnung hat den weiteren Vorteil, dass das von den Bienen ausgesonderte Propolis von den Gittern vom Imker geerntet und verwertet werden kann. Es ist empfehlenswert, das Propolis regelmäßig von den Sperrstrukturen zu entfernen, um die Bienen permanent zu motivieren, in den Bereich der Funktionsräume einzudringen und dort den in den Funktionsräumen angesiedelten Bücherskorpionen Gelegenheit zu geben, die Bienen von Varroamilben zu befreien.

Weiterhin ist es von Vorteil, wenn die Belüftungsfläche variabel einstellbar ist. Dies kann dadurch realisiert werden, dass alle oder zumindest einige Entlüftungsöffnungen verschließbar sind, beispielsweise mithilfe von Schiebern, die durch Verfahren in eine geöffnete, geschlossene oder teilweise geöffnete Stellung gebracht werden können. In einer einfachen Gestaltungsvariante sind die Entlüftungsöffnungen so gestaltet, dass sie mit einem Stopfen, z.B. einem Flaschenkorken, bedarfsweise verschlossen werden können. Mit einer variabel einstellbaren Belüftungsfläche können die in der Bienenbeute lebenden Bienen durch Vergrößern bzw. Verkleinern der Entlüftungsöffnungen bei der Regulierung der Temperatur in der Bienenbeute unterstützt werden. Beispielsweise kann die Winter die Belüftungsfläche klein gehalten werden, ohne dass eine Schimmelgefahr besteht, und im Sommer die Belüftungsfläche vergrößert werden, um die Luftzirkulation zu erhöhen und eine aktive Kühlung durch die Bienen zu erleichtern bzw. deren Energieaufwand hierfür zu minimieren.

In einer weiteren praktischen Ausführungsform einer erfindungsgemäßen Bienenbeute ist der Funktionsraum gemäß einer Variante a) zumindest in einem Teilbereich mit einem Füllmaterial derart befüllt, dass Bienen in das Füllmaterial selbst eindringen können, d.h. das Füllmaterial, vorzugsweise Stroh, soll möglichst lose derart in dem Funktionsraum angeordnet sein, dass die Bienen durch größere Abstände zwischen den Strohhalmen hindurch mit eigener Kraft insbesondere zu in diesen Bereichen des Funktionsraumes angeordneten Entlüftungsöffnungen gelangen können.

Gemäß einer Variante b), die ergänzend oder alternativ zur Variante a) realisierbar ist, ist in dem Funktionsraum oder im Bereich der Bienenbeute mindestens ein, sich auf den Funktionsraum auswirkendes Lockmittel für Bienen und/oder Bücherskorpione angeordnet. Als Lockmittel wird jedes Mittel angesehen, das die Frequentierung des Funktionsraumes durch die Bienen gegenüber einer Gestaltung ohne das Lockmittel erhöht. Als Lockmittel können insbesondere Lockstoffe, Botenstoffe, Pheromone, Futter, Wassertränke sowie Licht-, Schall- und/oder Wärmequellen in dem Funktionsbereich oder benachbart zu dem Funktionsbereich angeordnet werden, welche Bienen und/oder Bücherskorpione in die Funktionsbereiche locken, um es den sich dort aufhaltenden Bücherskorpionen so zu erleichtern, Varroamilben von den Bienen aufzunehmen.

Hinsichtlich dieses Aspekts hat es sich insbesondere in Verbindung mit in Umfangswänden angeordneten Funktionsräumen und in Verbindung mit außenseitig an einer Bienenbeute angeordneten separaten Funktionsräumen bewährt, in einem unteren Bereich Füllmaterial dicht derart anzuordnen, dass die Bienen nicht in diese eindringen können und in einem oberen Bereich das Füllmaterial derart lose anzuordnen, dass die Bienen in das Füllmaterial eindringen können. Eine solche Gestaltung hat den Vorteil, dass Bücherskorpione, die deutlich kleiner sind als Bienen, in einem unteren Bereich von den Bienen ungestört leben können, so dass dieser Bereich als Rückzugsort für die Bücherskorpione dient. Dieser Bereich eignet sich für Bücherskorpione sehr gut als Brutstätte. Ferner ist die Umfangswand in diesem Bereich besser thermisch gegenüber der Umgebung isoliert. In dem oberen Bereich ist vorgesehen, dass die Bienen und Bücherskorpione sich gemeinsam aufhalten, um den Bücherskorpionen das Entnehmen von Varroamilben von den Bienen zu erleichtern und somit eine "Reinigung" der Bienen von Varroamilben zu fördern. Die Nähe des Bereiches, in dem sich die Bienen aufhalten, zu den Brutstätten der Bücherskorpione ist besonders von Vorteil, da die Bücherskorpione hier eine schnell zugängliche Quelle an Nahrung - die Varroamilbe - vorfinden, was die weitere Vermehrung von Bücherskorpionen begünstigt. Da die Varroose bei einer Ausführungsform mit Stroh, das regelmäßig von Bienen aufgesucht wurde, besonders wirkungsvoll bekämpft werden konnte, wird vermutet, dass das Stroh selbst durch die mechanische Reibung mit den Bienen einen Reinigungseffekt erzielt und somit unabhängig von Bücherskorpionen im Einzelfall eine mechanische Ablösung von Varroamilben von den Bienen hervorgerufen wird und/oder dass aus anderen, nicht im Detail bekannten Gründen die Bienen innerhalb des Füllmaterials, insbesondere Stroh, von den Varroamilben befreit werden, beispielsweise weil die Varroamilben auf Inhaltsstoffe des Füllmaterials reagieren und die Bienen selbständig verlassen.

Es wurde ferner die Beobachtung gemacht, dass insbesondere eine lose Anordnung von Füllmaterial in einem Bereich eines Funktionsraumes, der auch eine Entlüftungsöffnung aufweist, einen Belüftungspfad hervorruft, der von den Bienen im Aufnahmeraum erkannt und aufgesucht wird, um die Bienenbeute gegenüber der Umgebung wie vorstehend beschrieben abzudichten. In einer Versuchsanordnung wurden gute Ergebnisse bei einem Funktionsraum erzielt, in welchem im unteren Bereich eine dichte Anordnung von Stroh (manuelle gepresste Lage) und im oberen Bereich eine eher lose Anordnung von Stroh übereinander erfolgte, wobei im oberen Bereich Entlüftungsöffnungen vorgesehen waren.

Wenn der Aufnahmeraum einer erfindungsgemäßen Bienenbeute zur Anordnung von Wabenrähmchen ausgebildet ist, es sich also um eine sogenannte Magazinbeute handelt, und der mindestens eine Funktionsraum in einem geringen Abstand von nur 1-50 mm, insbesondere 2-25 mm und besonders bevorzugt 6-10 mm, zu den Wabenrähmchen angeordnet ist, wird es den Bücherskorpionen erleichtert, aus dem Funktionsraum zu den Wabenrähmchen und den in den Wabenrähmchen aufgenommenen Bienenwaben zu gelangen. Besonders gute Ergebnisse wurden vorliegend mit Abständen zwischen 6 mm und 9 mm zwischen den Wabenrähmchen und einem in einer Umfangswand angeordneten Funktionsraum erzielt. In diesem Zusammenhang wird auch darauf hingewiesen, dass ein Funktionsraum oberhalb, insbesondere unmittelbar auf Wabenrähmchen realisiert sein kann, insbesondere durch Anordnung eines Füllmaterials unmittelbar auf der Oberseite der Wabenrähmchen. Alternativ kann ein Funktionsraum auch mit geringem Abstand zwischen dem Funktionsraum und der Oberseite der Wabenrähmchen vorgesehen sein, um den Bienen einen erleichterten Durchgang zwischen den Wabenrähmchen und der Oberseite der Wabenrähmchen zu ermöglichen. Dazu kann beispielsweise ein Drahtgitter in geringem Abstand oberhalb der Oberseite von Wabenrähmchen in einer Bienenbeute angeordnet sein, das als Boden für einen Funktionsraum dient. Vorteilhaft kann es in diesem Zusammenhang sein, wenn das Füllmaterial noch teilweise durch den Boden in den Zwischenraum zwischen dem Boden des Funktionsraumes und der Oberseite der Wabenrähmchen ragt. Wenn bei einer erfindungsgemäßen Bienenbeute in dem Funktionsraum mindestens eine Begrenzungswand eine regelmäßig oder unregelmäßig profilierte Oberflächenstruktur aufweist, ergeben sich besonders positive Lebensbedingungen für den in dem Funktionsraum angesiedelten Bücherskorpion, was sich mittelfristig vorteilhaft auf die Anzahl der Bücherskorpione in der Bienenbeute und dann auch auf die Bekämpfung der Varroose mittels Bücherskorpionen auswirkt. Hinsichtlich profilierter Oberflächenstrukturen wird insbesondere auf die Verwendung von Holzdielen, vorzugsweise mit geriffelter Struktur (Riffelung), oder unregelmäßigen, insbesondere ungehobelten und/oder durch Spalten und/oder Brechen erzeugten, Holzoberflächen verwiesen, die als Auskleidung beziehungsweise Begrenzung einer Umfangswand verwendet werden können, insbesondere im Bereich der Außenseiten, des Bodens und der Oberseite. Hierauf wird in Verbindung mit der Figurenbeschreibung noch im Detail eingegangen.

In einer weiteren praktischen Ausführungsform einer erfindungsgemäßen Bienenbeute ist das Füllmaterial zumindest teilweise aus dem Funktionsraum herausragend angeordnet. Besonders bevorzugt hierbei ist es, wenn das Füllmaterial soweit aus dem Funktionsraum herausragt, dass es Kontakt zu in dem Aufnahmeraum angeordneten Bienenwaben beziehungsweise Wabenrähmchen aufweist. In diesem Fall erfüllt das Füllmaterial die Funktion einer "Brücke" für Bücherskorpione und erleichtert es diesen, sich zwischen Funktionsraum und Bienenwaben zu bewegen. Es hat sich herausgestellt, dass durch eine derartige Anordnung die Zahl der sich aus dem Funktionsraum zu den Bienenwaben bewegenden Bücherskorpione signifikant erhöht und dadurch die "Reinigung" der Bienen von Varroamilben mittels Bücherskorpionen auch im Bereich der Bienenwaben deutlich verbessert wird.

Hinsichtlich der Dimensionierung eines Funktionsraumes hat sich gezeigt, dass eine Mindesterstreckung des Funktionsraumes über einen horizontalen Bereich einer Fläche von 4 cm x 4 cm besonders geeignet ist. Weiter bevorzugt erstreckt sich der Funktionsraum über eine Fläche von mindestens 5 cm x 5 cm, 8 cm x 8 cm, 10 cm x 10 cm, 12 cm x 12 cm oder 14 cm x 14 cm. Nur der Vollständigkeit halber wird darauf verwiesen, dass eine quadratische Fläche nicht erforderlich ist, sondern anstelle der genannten Mindestmaße auch rechteckige oder anders geformte Flächen als Grundfläche für einen Funktionsraum dienen können. In der Praxis häufig anzutreffende Bienenbeuten weisen Aufnahmeräume mit einer Breite I₂ von ca. 40-50 cm und einer Länge l₁ zwischen 50 und 100 cm auf. In solchen Fällen können die Funktionsräume besonders vorteilhaft über den gesamten Umfang ausgebildet werden, insbesondere so, dass das kleinste Maß des Funktionsraumes die Breite b ist, welche sich von der jeweiligen Innenwand des Aufnahmeraumes nach außen erstreckt.

Für erfindungsgemäße Bienenbeuten, bei welchen gemäß dem Merkmal b) des Anspruchs 1 ein Funktionsraum in der mindestens einen Umfangswand ausgebildet ist, wird der Funktionsraum besonders bevorzugt in mindestens in zwei Umfangswänden über die gesamte Längs- beziehungsweise Quererstreckung der Bienenbeute ausgebildet. Die Breite b wird dabei vorzugsweise zwischen 5 cm und 20 cm gewählt, wobei auch größere Breiten möglich sind. Insbesondere Breiten zwischen 6 cm und 16 cm sind besonders vorteilhaft. Mit einer Breite von ca. 12 cm wurden in Versuchen sehr gute Ergebnisse hinsichtlich der Varroose-Bekämpfung erzielt.

In einer weiteren Ausführungsform ist in einer wie vorstehend beschriebenen Bienenbeute bzw. in einer Bienenbeute mit einem durch mindestens eine Umfangswand begrenzten Aufnahmeraum zur Anordnung von Bienenwaben oberhalb von in dem Aufnahmeraum angeordneten Bienenwaben ein für Bienen zugänglich gestalteter Funktionsraum ausgebildet ist, der zumindest teilweise derart mit einem Füllmaterial befüllt ist, dass die Bienen den mit dem Füllmaterial befüllten Funktionsraum zumindest teilweise durchdringen können.

In diesem Zusammenhang wird nochmals darauf verwiesen, dass Bienenwaben bei Magazinbeuten üblicherweise sogenannten Wabenrähmchen angeordnet sind. Der Begriff Bienenwabe steht insoweit vorliegend auch für Bienenwaben, die in Wabenrähmchen angeordnet sind. Dementsprechend ist der Funktionsraum bei Magazinbeuten oberhalb der Wabenrähmchen angeordnet. Derartige Wabenrähmchen werden oberseitig häufig durch Holzlatten gebildet, die quer auf Seitenwänden der Bienenbeute aufliegend angeordnet sind. Die Anordnung eines Funktionsraumes in dem Bereich oberhalb von Bienenwaben bzw. Wabenrähmchen hat den Vorteil, dass sich in diesem Bereich erfahrungsgemäß viele Bienen aufhalten bzw. viele Bienen diesen Bereich passieren.

Ein Funktionsraum oberhalb von Bienenwaben kann sich entweder unmittelbar oberhalb der Bienenwaben anschließen oder beabstandet zu den Bienenwaben angeordnet sein. Wenn der Funktionsraum beabstandet ist, ist es bevorzugt, als Höhe für den Abstand maximal 15 mm zu wählen, weiter bevorzugt maximal 10 mm. Besonders bevorzugt ist ein Bereich zwischen 6 mm und 9 mm. Der Abstand kann beispielsweise dadurch vorgegeben werden, dass ein Drahtgitter oder eine sonstige gitterartige Struktur als Boden für den Funktionsraum in einem entsprechenden Abstand oberhalb der Bienenwabe bzw. eines Wabenrähmchens angeordnet wird. Das Drahtgitter bzw. die sonstige gitterartige Struktur sollte Öffnungen aufweisen, welche ausreichend groß sind, damit Bienen durch diese Öffnungen in den Funktionsraum gelangen können, insbesondere eine Öffnungsweite von mindestens 5 mm, vorzugsweise eine Öffnungsweite zwischen 5 mm und 20 mm, insbesondere 10 mm (+/- 4 mm).

Weiter bevorzugt ist es in diesem Zusammenhang, wenn über dem oberhalb der Bienenwaben angeordneten Funktionsraum, insbesondere unmittelbar angrenzend an den Funktionsraum, Trennelemente derart angeordnet sind, dass zwischen den Trennelementen schmale, für Bienen nicht zugängliche Spalte gebildet sind. Derartige Spalte weisen vorzugsweise eine maximale Breite von 3 mm auf. Ein besonders geeigneter Bereich für die Breite derartiger Spalte liegt zwischen 1 mm und 3 mm. Die Spalte ermöglichen es somit Bücherskorpionen und auch sonstige Pseudoskorpionen durch diese hindurch in einen Bereich oberhalb der Trennelemente zu gelangen. Der Bereich zwischen Trennelementen kann von den Pseudoskorpionen als geschützter Lebensraum genutzt werden.

Vor diesen Hintergrund ist es besonders bevorzugt, wenn oberhalb der Trennelemente ein für Bienen aus dem Aufnahmeraum und aus dem Funktionsraum nicht zugänglicher Lebensraum für Bücherskorpione ausgebildet ist. Dabei kann es sich beispielsweise um einen größeren Hohlraum handeln, der mit einem Füllmaterial gefüllt ist, insbesondere mit Stroh, Heu, Holz und/oder Spreu (auch Kaff genannt). In diesem Fall ist in einer erfindungsgemäßen Bienenbeute mit dem Lebensraum ein besonders geeigneter Brutort und Rückzugsort für Bücherskorpione und andere Pseudoskorpione geschaffen, der für Bienen nicht erreichbar ist und in welchem die Bücherskorpione und Pseudoskorpione von den Bienen ungestört leben können. Durch die Spalte zwischen den Trennelementen ist ein kurzer, für die Bücherskorpione zugänglicher Verbindungsweg in den Funktionsraum geschaffen. Dort können die Bücherskorpionen und/oder Pseudoskorpione Bienen von Varroamilben befreien.

Die Anordnung eines Lebensraumes für Bücherskorpione und/oder Pseudoskorpione oberhalb eines Aufnahmeraumes zur Anordnung von Bienenwaben hat den weiteren Vorteil, dass die Pseudoskorpione am besten von der Wärme einer in der Bienenbeute gebildeten Bienentraube profitieren, insbesondere im Winter. Ein so angelegter Lebensraum stellt ein hervorragendes Zuchtgefäß für Pseudoskorpione dar.

Die genannten Spalte zwischen den Trennelementen sind darüber hinaus derart klein, dass nahezu kein Luftaustausch zwischen dem Bereich unterhalb der Trennelemente und dem Bereich oberhalb der Trennelemente stattfindet. Dementsprechend ist zumindest eine Entkopplung des Luftraumes oberhalb der Trennelemente (Lebensraum für die Bücherskorpione) und des Luftraumes unterhalb der Trennelemente (Aufnahmeraum zur Anordnung von Bienenwaben mit darüber angeordnetem Funktionsraum) realisiert.

Für die klimatischen Verhältnisse in der Bienenbeute ist es bevorzugt, wenn die Trennelemente Holzelemente sind. Dabei hat es sich als besonders vorteilhaft erwiesen, wenn die als Trennelemente vorgesehenen Holzelemente zumindest teilweise aus Stirnholz bestehen, das mit seiner Faserrichtung in Richtung des Funktionsraumes orientiert ist. Derartiges Stirnholz ist zur schnelleren Aufnahme und zum schnelleren Ausleiten großer Feuchtigkeitsmengen geeignet. Auf diese Weise wird ein großer Puffer für Feuchtigkeitsschwankungen zur Verfügung gestellt, wodurch die Schimmelgefahr in der Bienenbeute minimiert wird, insbesondere in benachbarten Funktionsräumen, die mit Stroh oder anderem Füllmaterial befüllt sind.

Unabhängig von der Art der verwendeten Trennelemente können derartige Trennelemente insbesondere in Form von quaderförmigen Klötzchen gebildet sein, die an einer sich oberseitig anschließenden Haltestruktur befestigt sind. Als Haltestruktur können insbesondere eine Deckplatte dienen oder mehrere sich quer über den Aufnahmeraum erstreckende, parallel zueinander ausgerichtete Holzlatten. Dabei können die Trennelemente bündig an der Haltestruktur angeordnet sein, oder es können weitere Spalte dadurch gebildet sein, dass die Trennelemente mit einem gewissen Abstand zu der Haltestruktur angeordnet sind, insbesondere mit einem Abstand von weniger als 5 mm, vorzugsweise mit einem Abstand von 1 mm bis 3 mm, besonders bevorzugt 1 mm bis 2 mm. In diesem Fall können auch diese Spalte von Pseudoskorpionen als geschützter Lebensraum genutzt werden.

Der Vollständigkeit halber wird darauf hingewiesen, dass eine Bienenbeute mit einem durch mindestens eine Umfangswand begrenzten Aufnahmeraum zur Anordnung von Bienenwaben, bei welcher oberhalb von in dem Aufnahmeraum angeordneten Bienenwaben ein für Bienen zugänglich gestalteter Funktionsraum ausgebildet ist, der zumindest teilweise derart mit einem Füllmaterial befüllt ist, dass die Bienen den mit dem Füllmaterial befüllten Funktionsraum zumindest teilweise durchdringen können, mit einzelnen Merkmalen aus den Ansprüche 2 bis 9 beliebig kombinierbar ist, soweit dies nicht aus Gründen der Logik ausgeschlossen ist. Insbesondere wird darauf verwiesen, dass Belüftungspfade anstelle von Trennelementen in einem Deckel einer Bienenbeute ausgebildet sein können.

Die Erfindung betrifft auch eine Bienenbeute mit einem durch mindestens eine Umfangswand begrenzten Aufnahmeraum zur Anordnung von Bienenwaben, bei welcher innerhalb der Bienenbeute und/oder in einem mit der Bienenbeute verbundenen Zusatzmodul mindestens ein Lebensraum für Pseudoskorpione ausgebildet ist, welcher als Brutraum und Rückzugsort für die Pseudoskorpione konstruktiv für die Bienen aus der Bienenbeute nicht zugänglich gestaltet ist. Es wurde insoweit festgestellt, dass es - auch unabhängig von mit Füllmaterial gefüllten Funktionsräumen für Bienen - zur Bekämpfung der Varroose vorteilhaft ist, wenn ein Lebensraum für Pseudoskorpione (einschließlich Bücherskorpionen) derart funktional vorgesehen ist, dass sich die Pseudoskorpione ungestört von den Bienen in einen solchen Lebensraum zurückziehen können, aber zugleich durch schmale Spalte zu den Bienen gelangen können, beispielsweise um sich Varroamilben von den Bienen als Nahrung zu beschaffen. Die vorstehend beschriebene Trennung zwischen einem Lebensraum für Pseudoskorpione und eine Bienenbeute kann insoweit auch unabhängig von mit Füllmaterial gefüllten Funktionsräumen für Bienen zur Bekämpfung der Varroose geeignet sein. Die Trennung kann insbesondere mit Hilfe von Holzklötzen erfolgen, insbesondere wie vorstehend beschrieben mittels Stirnholzklötzen. Optionale, unmittelbar benachbart zu den Spalten angeordnete Funktionsräume für Bienen sind zusätzlich von Vorteil, um den Kontakt zwischen Bienen und Pseudoskorpionen zu intensivieren und die Befreiung der Bienen vor Varroamilben zu fördern.

Wenn für die Pseudoskorpione ein entsprechender Lebensraum ausgebildet ist, werden die Spalte, welche für die Pseudoskorpione als Zugang zu einem Bienenraum (damit ist hier ein Bereich der Bienenbeute gemeint, welcher für Bienen erreichbar ist) dienen, vorzugsweise so orientiert, dass die Pseudoskorpione von den Spalten aus möglichst viele Bienen kontaktieren können.

Die Erfindung betrifft auch ein Zusatzmodul für eine Bienenbeute mit einem Aufnahmeraum für Bienenwaben, wobei das Zusatzmodul einen Funktionsraum umfasst, der zumindest teilweise mit einem Füllmaterial derart befüllbar ist, dass das Füllmaterial in dem Funktionsraum verbleibt und die Bienen dennoch Zugang zu dem mit Füllmaterial befüllbaren Bereich erhalten, wobei der Funktionsraum dem Aufnahmeraum zugewandt mindestens eine Zugangsöffnung für Bienen aufweist. Als ein solches Zusatzmodul kommen insbesondere ein außenseitig anzubringendes separates Element sowie ein innenseitig anzuordnendes Element in Betracht, insbesondere ein innenseitig anzuordnendes Element, das die Form und Maße eines Wabenrähmchens aufweist.

Hinsichtlich des außenseitig anzubringenden Zusatzmoduls wird insbesondere auf die Möglichkeit verwiesen, ein solches Zusatzmodul derart an eine Außenwand einer Bienenbeute anzubringen, dass Bienen über eine in einer Umfangswand einer Bienenbeute ausgebildete Öffnung, in deren Bereich das Zusatzmodul angeordnet ist, in das Zusatzmodul gelangen können. Ein solches Zusatzmodul weist vorzugsweise dem Aufnahmeraum abgewandt mindestens eine Entlüftungsöffnung auf.

Eine solche Entlüftungsöffnung ist weiter bevorzugt entweder so ausgebildet, dass die Bienen aus der Entlüftungsöffnung nicht nach außen gelangen können, oder eine solche Entlüftungsöffnung ist mithilfe einer Sperrstruktur verschlossen, so dass die Bienen nicht durch die Sperrstruktur nach außen gelangen können. Eine in einem Zusatzmodul angeordnete Entlüftungsöffnung ist vorzugsweise bei bestimmungsgemäßer Anordnung des Zusatzmoduls an der Bienenbeute oberhalb der Zugangsöffnung für die Bienen angeordnet, so dass ein Belüftungspfad durch die Zugangsöffnung für die Bienen nach oben durch den Funktionsraum hindurch zu der Entlüftungsöffnung führt. Die Entlüftungsöffnung weist vorzugsweise einen Durchmesser von 1 cm bis 10 cm auf, besonders vorteilhaft hat sich ein Durchmesser von 5 cm erwiesen. Die Entlüftungsöffnungen können auch nicht kreisförmig ausgebildet sein. Unabhängig von der Form der Entlüftungsöffnungen sind solche mit Einzelquerschnittsflächen zwischen 0,5 cm² und 100 cm², insbesondere zwischen 5 cm² und 50 cm² bevorzugt.

Hinsichtlich eines innenseitig in einem Aufnahmeraum anordenbaren Zusatzmoduls wird insbesondere auf die Möglichkeit verwiesen, ein Zusatzmodul in Form eines Wabenrähmchens auszubilden. Auf die vorstehend bereits erwähnten Details hinsichtlich der Gestaltung eines solchen Wabenrähmchens wird hiermit noch einmal verwiesen.

Ferner wird auf sämtliche vorstehend in Verbindung mit Funktionsräumen in einer Bienenbeute beschriebene Merkmale verwiesen. Diese können analog auch in einem Zusatzmodul verwirklicht werden. Insbesondere wird auf Zusatzmodule mit bereits eingesetztem Füllmaterial verwiesen, insbesondere Stroh.

Weitere praktische Ausführungsformen und Vorteile der Erfindung sind nachfolgend im Zusammenhang mit den Zeichnungen beschrieben. Es zeigen:
- Fig. 1: eine perspektivische Darstellung einer beispielshaften Ausführungsform einer erfindungsgemäßen Bienenbeute, von welcher nur die Umfangswände und einige weitere Einzelheiten exemplarisch dargestellt sind,
- Fig. 2: eine Ausführungsform eines erfindungsgemäßen Zusatzmoduls, das in einen Aufnahmeraum einer erfindungsgemäßen Bienenbeute einsetzbar ist,
- Fig. 3: eine weitere Ausführungsform eines erfindungsgemäßen Zusatzmoduls, das außenseitig an eine erfindungsgemäße Bienenbeute anordenbar ist,
- Fig. 4: eine Querschnittsdarstellung durch die in Figur 1 gezeigte Bienenbeute zur Visualisierung von Belüftungspfaden und
- Fig. 5: eine weitere Ausführungsform einer erfindungsgemäßen Bienenbeute mit einem Funktionsraum oberhalb eines Aufnahmeraumes zur Anordnung von Bienenwaben in einer vereinfachten Querschnittsdarstellung.

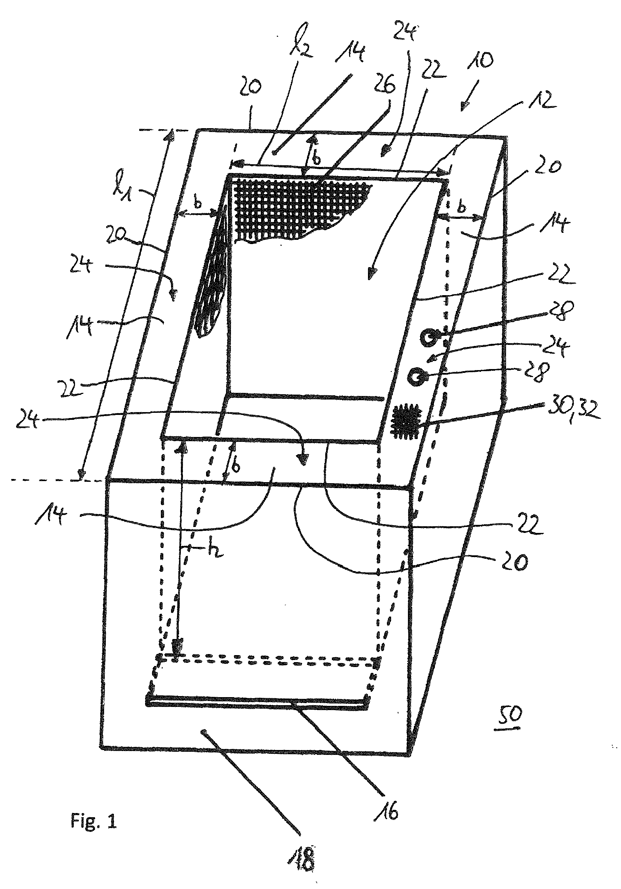

Figur 1 zeigt eine erfindungsgemäße Bienenbeute 10, welche in einer dreidimensionalen Darstellung ohne Boden und ohne Dach dargestellt ist. Die Bienenbeute 10 umfasst einen quaderförmigen Aufnahmeraum 12 zur Anordnung von - ebenfalls nicht dargestellten - Bienenwaben, welcher durch Umfangswände 14 begrenzt ist. An der in Figur 1 stirnseitig angeordneten Umfangswand ist im unteren Bereich ein Flugloch 16 ausgebildet, über welches die Bienen von dem Aufnahmeraum 12 aus der Bienenbeute 10 nach außen in die Umgebung 50 gelangen können. Der in Figur 1 unterhalb des Fluglochs 16 angedeutete Bereich 18 kann als Boden der Bienenbeute 10 in bekannter Weise ausgebildet werden, indem mittels eines nicht dargestellten Gitters oder sonstigen Maßnahmen das Eindringen von Tieren, insbesondere kleinen Nagetieren, von der Unterseite her entgegengewirkt wird. Häufig wird die Luftzufuhr in diesem Bereich auch mittels eines Isoliermaterials (nicht dargestellt) begrenzt. Der Bereich 18 kann entsprechend gemäß einer aus dem Stand der Technik bekannten Art und Weise gestaltet sein. Insbesondere kann in diesem Bereich 18 ein sogenanntes Flugbrett angeordnet sein. Dabei handelt es sich um eine ausschließlich oder überwiegend horizontal angeordnete Fläche, auf der die Bienen unmittelbar vor dem Flugloch 16 starten und landen können.

In der gezeigten Ausführungsform sind die Umfangswände 14 als Hohlkammern ausgebildet. Sie umfassen jeweils eine wetterfeste Außenwand 20 und eine innenseitige, für Bienen zugängliche Begrenzungsstruktur 22. Die Unterseite und die Oberseite der Funktionsräume sind in der gezeigten Ausführungsform ebenfalls durch im Wesentlichen luftdichte Elemente begrenzt (hier kommen Holzdielen in Form von Terrassendielen zum Einsatz). Durch den beschriebenen Aufbau ergibt sich zwischen der Begrenzungsstruktur 22 und den Außenwänden 20 ein als Funktionsraum 24 dienender Hohlraum mit der Breite b und der Höhe h. Die Breite b der resultierenden Funktionsräume 24 beträgt in der in Figur 1 gezeigten Ausführungsform ca. 12 cm. In Längsrichtung weisen die Funktionsräume 24 die Länge l₁ auf (hier: ca. 100 cm), in Querrichtung die Länge l₂ (hier: ca. 45 cm).

Wie in Figur 1 angedeutet, wurden als Begrenzungsstrukturen 22 bei der in Figur 1 gezeigten Ausführungsform Gitter 26 verwendet, die in Figur 1 nur ausschnittsweise dargestellt sind. Diese Gitter 26 weisen in der gezeigten Ausführungsform eine Maschenweite von ca. 10 mm auf, was einem Maß (Diagonale) von ca. 14 mm entspricht. Dies ermöglicht es, Bienen, welche üblicherweise nicht mehr als 4 mm breit sind, ohne Behinderung von dem Aufnahmeraum 12 in die Funktionsräume 24 zu gelangen. Andererseits wird nicht dargestelltes Füllmaterial, hier Stroh, sicher in den Funktionsräumen 24 gehalten.

In den Funktionsräumen 24 ist in der gezeigten Ausführungsform in der unteren Hälfte der Höhe h als Füllmaterial nicht dargestelltes Stroh derart dicht angeordnet, dass die Bienen in diesen Bereich nicht eindringen können. In dem oberen Bereich hingegen ist ebenfalls nicht dargestelltes, als Füllmaterial dienendes Stroh derart in den Funktionsräumen 24 angeordnet, dass ausreichend Freiräume verbleiben, damit die Bienen in diese Funktionsräume 24 eindringen können.

Die Außenwände 20 bestehen in der gezeigten Ausführungsform aus Holzdielen (nicht im Detail dargestellt), die - insbesondere auf der zur Innenseite der Bienenbeute 10 gerichteten Seite - eine regelmäßige profilierte Struktur (Riffelung) aufweisen. Derartige Holzdielen wurden bei der in Figur 1 gezeigten Ausführungsform auch verwendet, um die Oberseite und die Unterseite (Boden) der Funktionsräume 24 zu verschließen.

Um eine ausreichende Belüftung der Bienenbeute 10 zu ermöglichen, wurden in die Holzdielen, welche als obere Verkleidung der Funktionsräume 24 dienen, mehrere Entlüftungsöffnungen 28 eingebracht, von welchen in Figur 1 nur zwei Entlüftungsöffnungen 28 klar erkennbar sind. Eine dritte, in Figur 1 dargestellte Entlüftungsöffnung 28 ist mit einem als Sperrstruktur 30 dienenden sogenannten Propolisgitter 32 verschlossen dargestellt. Solche Propolisgitter 32 sind vorzugsweise auf allen Entlüftungsöffnungen 28 angeordnet. Sie weisen in der gezeigten Ausführungsform eine Maschenweite von ca. 2 mm auf. Mit Propolisgittern 32 wird verhindert, dass die Bienen aus den Funktionsräumen 24 durch die Entlüftungsöffnung 28 aus der Bienenbeute 10 herausgelangen und gefördert, dass die Bienen diese von den Funktionsräumen 24 aus aufsuchen und dort Propolis aussondern. Durch die Ausbildung von Entlüftungsöffnungen 28 werden ferner Belüftungspfade durch die Bienenbeute 10 gebildet, die sich durch den nicht im Detail dargestellten Boden von unten in den Aufnahmeraum 12, dann in die Funktionsräume 24 und aus den Funktionsräumen 24 durch die Entlüftungsöffnung 28 nach außen in die Umgebung 50 erstrecken.

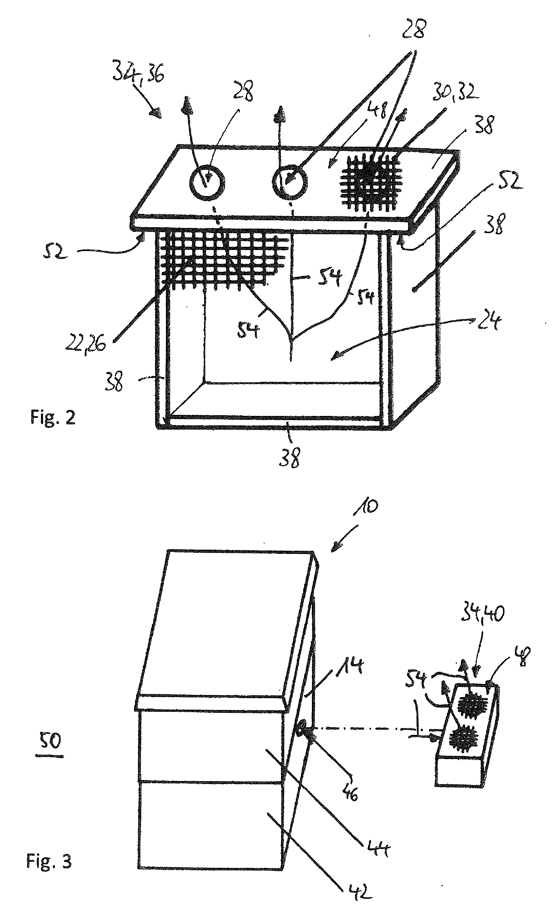

Figur 2 zeigt ein Ausführungsbeispiel eines erfindungsgemäßen Zusatzmoduls 34 in Form eines Rahmens 36. Wie in Figur 2 zu erkennen ist, besteht der Rahmen 36 in der gezeigten Ausführungsform im Wesentlichen aus vier einen Funktionsraum 24 begrenzenden Einzelelementen 38. Als Einzelelemente 38 wurden vorliegend Holzdielen verwendet. Es können jedoch auch andere geeignete Materialien eingesetzt werden. Wie ansatzweise dargestellt ist, ist der Funktionsraum 24 zumindest einseitig mittels einer Begrenzungsstruktur 22 verschlossen, bei welcher es sich vorliegend - wie bei der in Figur 1 gezeigten Ausführungsform - um ein Gitter 26 handelt. Die gegenüberliegende, in Figur 2 offen dargestellte Seite, kann entweder ebenfalls mit einer Begrenzungsstruktur 22 oder mit einem Einzelelement 38 in Form einer Holzdiele oder eines anderen Elements (beides nicht dargestellt) verschlossen sein.

In Figur 2 ist ferner zu erkennen, dass auf der Oberseite des Zusatzmoduls 34 Entlüftungsöffnungen 28 ausgebildet sind, die ebenfalls mit als Sperrstrukturen 30 dienenden Propolisgittern 32 verschlossen sind.

In Figur 2 ist auch zu erkennen, dass das obere, als Deckelement dienende Einzelelement 38 seitlich gegenüber den als Seitenelementen dienenden Einzelelementen 38 hervorsteht. Dadurch weist das in Figur 2 gezeigte Zusatzmodul 34 eine Geometrie auf, die bekannten, aber in Figur 2 nicht dargestellten Wabenrähmchen entspricht. Das in Figur 2 gezeigte Zusatzmodul 34 kann damit in gleicher Art und Weise wie Wabenrähmchen in eine in Figur 1 gezeigte Magazinbeute eingesetzt werden. Seitlich gegenüber den als Seitenwänden dienenden Elementen 38 überstehende Bereiche 52 liegen dann auf der Oberseite der Umfangswände 14 auf, so dass der untere Teil des Rahmens 36 in dem Aufnahmeraum 12 der Bienenbeute 10 angeordnet ist und dort frei hängt.

Abweichend zu der in Figur 2 gezeigten Darstellung können anstelle der gezeigten Elemente 38, insbesondere an der Seite und am Boden des Zusatzmoduls 34 ebenfalls Begrenzungsstrukturen 22 angeordnet sein, die für Bienen und Bücherskorpione durchdringbar sind. In diesem Fall wird es den Bücherskorpionen und Bienen auch von anderen Seiten ermöglicht, in den Funktionsbereich 24 eines Zusatzmoduls 34 in Form eines Rahmens 36 zu gelangen.

Figur 3 zeigt eine weitere Ausführungsform eines erfindungsgemäßen Zusatzmoduls 34 in Form eines an einer Außenseite einer Bienenbeute 10 anzuordnenden Kastens 40. Bei der in Figur 3 gezeigten Bienenbeute 10 handelt es sich um eine aus dem Stand der Technik bekannte Bienenbeute 10 in Form einer Zweiraum-Magazinbeute mit einem unteren Beutebehälter 42 und einem oberen Beutebehälter 44. In jedem Beutebehälter 42, 44 befindet sich ein Aufnahmeraum (nicht dargestellt) für Wabenrähmchen, beispielsweise wie in Figur 1 dargestellt. Die Beutebehälter 42, 44 weisen allerdings gemäß Stand der Technik einfache Umfangswände (z.B. bestehend aus Holzwänden) auf, in welchen keine Hohlräume und auch keine Funktionsräume ausgebildet sind. Das in Figur 3 nicht dargestellte Flugloch stellt eine Verbindung zwischen der Umgebung 50 und dem in dem unteren Beutebehälter 42 angeordneten unteren Aufnahmeraum her. Der obere Aufnahmeraum ist nur eine nicht dargestellte Öffnung von dem unteren Aufnahmeraum aus erreichbar. Bei wie in Figur 3 dargestellten Bienenbeuten 10 befindet sich üblicherweise in dem unteren Aufnahmeraum die Brut, während in dem oberen Aufnahmeraum ausschließlich Honigwaben zu finden sind.

Wie in Figur 3 gezeigt, ist in einer Umfangswand 14 des unteren Beutebehälters 42 eine Öffnung 46 ausgebildet, die dazu vorgesehen ist, eine Verbindung von dem nicht erkennbaren Aufnahmeraum des unteren Beutebehälters 42 durch eine nicht dargestellte Zugangsöffnung in dem Kasten 40 zu dem gezeigten Zusatzmodul 34 herzustellen. Das Zusatzmodul 34 weist an seiner Oberseite 48 zwei Entlüftungsöffnungen 28 auf, welche mittels als Sperrstrukturen 30 dienenden Propolisgittern 32 einen Austritt von Bienen aus dem sich innerhalb des Zusatzmoduls 34 befindenden Funktionsraum verhindern.

Der in Figur 3 nicht erkennbare Funktionsraum ist in Form eines Hohlraumes ausgebildet. In dem Hohlraum ist Stroh derart angeordnet, dass Bienen in diesen mit Stroh gefüllten Hohlraum eindringen können und dadurch mit dort ansiedelbaren Bücherskorpionen in Kontakt treten, wenn sie den Funktionsraum aufsuchen.

Die in den Figuren 2 und 3 dargestellten Zusatzmodule sind Teile von Belüftungspfaden 54, die sich durch den Funktionsraum hindurch nach oben zu den Entlüftungsöffnungen 28 erstrecken.

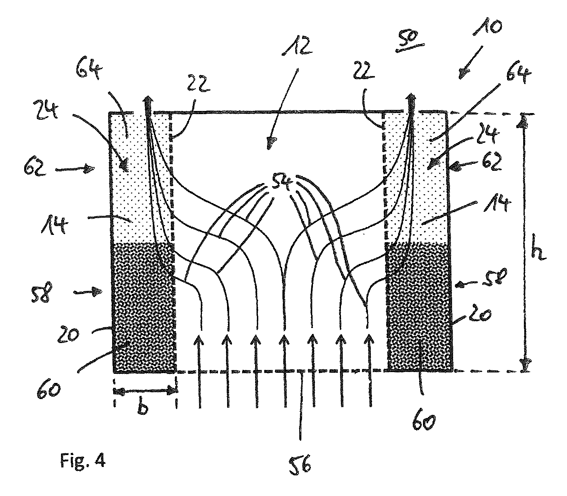

Figur 4 zeigt eine Querschnittsdarstellung durch die in Figur 1 gezeigte Bienenbeute 10 zur Visualisierung von Belüftungspfaden 54. Erkennbar sind zwei sich in Längsrichtung der Bienenbeute 10 erstreckende Umfangswände 14, die als Hohlraum gestaltet sind. Die Hohlräume sind außenseitig durch die Außenwände 20 in Form von Holzdielen wetterfest und im Wesentlichen luftdicht gestaltet. Innenseitig sind als Begrenzungsstrukturen 22 einfache Drahtgitter mit einer Maschenweite von 1 cm angeordnet. Der sich zwischen den Begrenzungsstrukturen 22 erstreckende Aufnahmeraum 12 ist wiederum ohne Bienenwaben dargestellt. Im Bereich des Bodens des Aufnahmeraumes 12 ist ein Gitter 56 angeordnet, auf welchem nicht dargestelltes Stroh angeordnet ist.

In unteren Bereichen 58 der Umfangswände 14 ist dicht gepacktes Stroh 60 derart angeordnet, dass Bienen nicht in diese Bereiche 58 eindringen können. In darüber angeordneten oberen Bereichen 62 ist lose angeordnetes Stroh 64 derart angeordnet, dass Bienen in diese oberen Bereiche 62 eindringen können.

Wie durch die Pfeile dargestellt ist, kann durch das Gitter 56 Luft von unten in den Aufnahmeraum 12 eindringen, durch den Aufnahmeraum 12, durch die oberen Bereiche 62 der Umfangswände, die als Funktionsbereiche 24 dienen zu den Entlüftungsöffnungen 28 mit den in Figur 4 nicht dargestellten Propolisgittern und durch diese hindurch in die Umgebung 50 strömen. Dadurch ergeben sich die aus Figur 4 ersichtlichen Belüftungspfade 54, welche Bienen motivieren, die Funktionsbereiche 24 aufzusuchen, wo sie effizient durch das lose angeordnete Stroh 60 und die dort angesiedelten Bücherskorpione von Varroamilben befreit werden können.

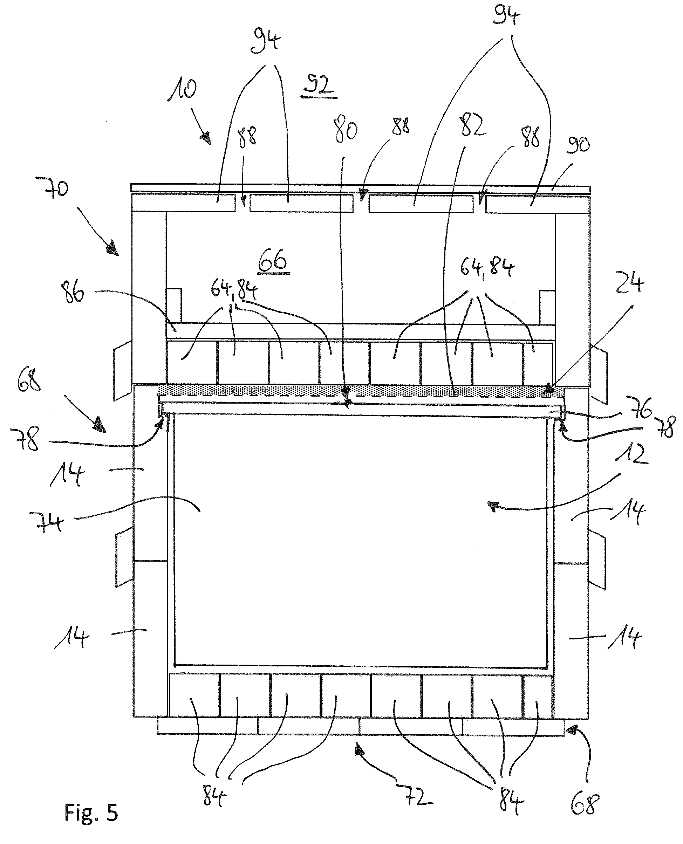

Figur 5 zeigt eine weitere Ausführungsform einer erfindungsgemäßen Bienenbeute 10 nach Art einer Magazinbeute mit einem Funktionsraum 24 oberhalb eines Aufnahmeraumes 12 zur Anordnung von Bienenwaben in einer vereinfachten Querschnittsdarstellung. Die Darstellung ist insoweit vereinfacht, als auf Schraffuren verzichtet wurde, obwohl sämtliche Elemente geschnitten dargestellt sind.

Die Bienenbeute 10 besteht im Wesentlichen aus einem oberseitig geöffneten Hauptgehäuse 68 und einem darauf aufgesetzten Deckelement 70. Die Außengeometrie des Hauptgehäuses 68 ist gebildet durch seitliche Umfangswände 14 und einen Boden 72. Der Boden 72 kann nicht dargestellte Belüftungsöffnungen umfassen. In der gezeigten Ausführungsform sind in dem Hauptgehäuse 68 im Bereich des Bodens zusätzlich optionale Stirnholzklötze 84 angeordnet, die sich über die gesamte Breite erstrecken. Zur Belüftung des Aufnahmeraumes 12 von der Unterseite her können die Stirnholzklötze teilweise beabstandet voneinander angeordnet sein, was in Fig. 5 nicht erkennbar ist.

Der Aufnahmeraum 12 ist größtenteils ausgefüllt von Wabenrähmchen 74, die an ihrer Oberseite eine Querlatte 76 umfassen, welche mit ihren äußeren Enden auf einem in den korrespondierenden Umfangswänden 14 gebildeten Absätzen 78 aufliegen. Oberhalb der Querlatte 76 des Wabenrähmchens 74 ist ein Bienenraum 80 vorgesehen, welcher sich in der gezeigten Ausführungsform über eine Höhe von ca. 6 mm und über die gesamte Breite der Bienenbeute 10 erstreckt. Besonders geeignet als Höhe für den Bienenraum 80 sind Höhen zwischen 6 mm und 12 mm, insbesondere 6 mm bis 9 mm.

Oberhalb des Bienenraumes 80 schließt sich der bereits erwähnte Funktionsraum 24 an. In der gezeigten Ausführungsform ist der Funktionsraum 24 gegenüber dem Bienenraum 80 mit einem Drahtgitter 82 abgegrenzt. Das Drahtgitter 82 weist Öffnungen mit einer Breite von ca. 5-10 mm auf, so dass Bienen aus dem Bienenraum 80 in den Funktionsraum 24 gelangen können. Der Funktionsraum 80 ist in der gezeigten Ausführungsform mit Stroh befüllt. Das Drahtgitter 82 dient dazu, das Stroh in dem Funktionsraum zu halten. Dabei ist es vorteilhaft, wenn einzelne Strohhalme durch das Drahtgitter 82 hindurch nach unten in den Bienenraum 80 hineinragen, weil dadurch den Pseudoskorpionen, insbesondere Bücherskorpionen, der Zugang auch zu Bienen im Bienenraum 80 ermöglicht wird.

Oberhalb des Funktionsraumes 24 sind als Trennelemente 64 dienende Stirnholzklötze 84 angeordnet. Diese sind mit ihrer Faserrichtung zum Funktionsraum 24 orientiert, da sie in dieser Orientierung große Mengen als Feuchtigkeit aufnehmen können und somit einer Schimmelbildung in dem Funktionsraum 24 entgegenwirken.

Zwischen den Trennelementen 64 sind Spalte ausgebildet, die eine maximale Breite von ca. 3 mm aufweisen und somit ein Durchdringen der Bienen verhindern, aber ein Durchdringen von Pseudoskorpionen, insbesondere Bücherskorpionen, ermöglichen. Die Trennelemente 64 sind an Querträgern 86 befestigt, von welchen in Fig. 5 nur einer zu erkennen ist. Zwischen den Querträgern 86, bei welchen es sich beispielsweise um parallel nebeneinander angeordnete Holzlatten handeln kann, sind ebenfalls Spalte gebildet, welche den Pseudoskorpionen, insbesondere Bücherskorpionen, den Zugang zu einem oberhalb der Querträger 86 ausgebildeten Lebensraum 66 ermöglichen. Der Lebensraum 66 ist mit Füllmaterial gefüllt ist, welches für ein verbessertes Wohlbefinden der Pseudoskorpione, insbesondere Bücherskorpione, geeignet ist.

Als Füllmaterial für Funktionsräume 24 und/oder Lebensräume 66 sind insbesondere Stroh, Heu, Holz (auch in Form von Holzspänen), Reisigzweige, Pappstreifen, Papierstreifen, Sägespäne und Spreu (auch als Kaff bezeichnet) geeignet.

Oberseitig des Lebensraumes 66 sind einzelne Elemente 94 beabstandet zueinander angeordnet, so dass dazwischen Belüftungsöffnungen 88 gebildet sind. Die Belüftungsöffnungen 88 sind zur Vermeidung des direkten Eindringens von Regen und Schutz von der Oberseite mit einer Platte 90 verdeckt. Dabei ist die Platte 90 derart angeordnet, dass eine ausreichende Luftzirkulation zwischen der Umgebung 92 der Bienenbeute und dem Lebensraum 66 durch seitliches Ausströmen von Luft zwischen der Platte 90 und den Elementen 94 stattfindet.

Der Begriff "Bücherskorpion" wird vorstehend, auch wenn im Einzelnen nicht gesondert darauf hingewiesen wurde, stellvertretend für alle Arten von Pseudoskorpionen und auch andere alternative Tiere verwendet, die für die Befreiung von Bienen von Varroamilben mit den beanspruchten Gegenständen Konzept und den beanspruchten Bienenbeuten und Zusatzmodulen geeignet sind. Damit sind insbesondere solche Tiere gemeint, die im ausgewachsenen Zustand deutlich kleiner sind als ausgewachsene Bienen, d.h. Tiere deren maximale Länge kleiner ist als 7 mm, bevorzugt kleiner als 6 mm und besonders bevorzugt kleiner als 5 mm. Alternativ oder in Ergänzung dazu ist es bevorzugt, wenn die Breite und Höhe der Pseudoskorpione (einschließlich Bücherskorpionen) oder anderen alternativen Tieren maximal 3 mm, bevorzugt maximal 2 mm und besonders bevorzugt maximal als 1 mm beträgt. Die Dimensionierung und Gestaltung eines Funktionsraumes wird vorzugsweise an die Größe und bekannte Lebensraumbedingungen des anstelle eines Bücherskorpions verwendeten Tieres angepasst.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Es wird darauf hingewiesen, dass sämtliche vorstehend beschriebenen Konstruktionsvarianten von Bienenbeuten auch zur Bekämpfung des kleinen Beutenkäfers hervorragend geeignet sind. Der kleine Beutenkäfer ist ein Parasit von Völkern der Honigbiene aus der Familie der Glanzkäfer (Nitidulidae). Er legt seine Eier bevorzugt in Ritzen und Spalten des Bienenvolkes sowie in verdeckelten Brutzellen ab. Nach 2-3 Tagen aus den Eiern schlüpfende Larven fressen Gänge durch die Bienenwaben. Sie fressen Honig, Pollen, tote Bienen und bevorzugt Brut und können die Waben komplett zerstören. Sofern kleine Beutenkäfer in eine erfindungsgemäße Bienenbeute gelangen, legen diese konstruktionsbeding ihre Eier in unmittelbarer Nähe der Pseudoskorpione bzw. Bücherskorpione ab. Diese werden die Larven dankbar annehmen und auffressen.

### Bezugszeichenliste

- 10: Bienenbeute
- 12: Aufnahmeraum
- 14: Umfangswände
- 16: Flugloch
- 18: Bereich unterhalb des Fluglochs
- 20: Außenwand
- 22: Begrenzungsstruktur
- 24: Funktionsraum
- 26: Gitter
- 28: Entlüftungsöffnung
- 30: Sperrstruktur
- 32: Propolisgitter
- 34: Zusatzmodul
- 36: Rahmen
- 38: Einzelelement
- 40: Kasten
- 42: unterer Kasten
- 44: oberer Kasten
- 46: Öffnung
- 48: Oberseite des Zusatzmoduls
- 50: Umgebung
- 52: überstehender Bereich
- 54: Belüftungspfad
- 56: Gitter
- 58: untere Bereiche
- 60: Stroh
- 62: obere Bereiche
- 64: Trennelement
- 66: Lebensraum für Bücherskorpione
- 68: Boden
- 70: Deckelelement
- 72: Hauptgehäuse
- 74: Wabenrähmchen
- 76: Querlatte
- 78: Absatz
- 80: Bienenraum
- 82: Drahtgitter
- 84: Stirnholzklötze
- 86: Querträger
- 88: Belüftungsöffnungen
- 90: Platte
- 92: Umgebung
- 94: Element

## Patentansprüche

1. Bienenbeute (10) mit einem durch mindestens eine Umfangswand (14) begrenzten Aufnahmeraum (12) zur Anordnung von Bienenwaben,
**dadurch gekennzeichnet,**
**dass**
a) in dem Aufnahmeraum (12) im Bereich der Bienenwaben,
b) in der mindestens einen Umfangswand (14) selbst und/oder
c) an die mindestens eine Umfangswand (14) außen angrenzend
ein für Bienen zugänglich gestalteter Funktionsraum (24) ausgebildet ist, der so gestaltet ist, dass er zumindest teilweise mit einem Füllmaterial derart befüllbar ist, dass das Füllmaterial in dem Funktionsraum (24) verbleibt und die Bienen dennoch Zugang zu dem mit Füllmaterial befüllbaren Bereich erhalten.

2. Bienenbeute (10) nach dem vorstehenden Anspruch, **dadurch gekennzeichnet, dass** die Bienenbeute (10) ein Flugloch (16) aufweist, welches den Aufnahmeraum (12) mit der Umgebung verbindet, und der Funktionsraum (24) in der dem Flugloch (16) zugewandten Hälfte der Bienenbeute (10) angeordnet ist.

3. Bienenbeute (10) nach einem oder mehreren der vorstehenden Ansprüche, **dadurch gekennzeichnet, dass** der Funktionsraum (24) durch einen Hohlraum gebildet ist, der zumindest an einer zu dem Aufnahmeraum (12) gerichteten Seite mit einer für Bienen zugänglichen Begrenzungsstruktur (22) versehen ist.

4. Bienenbeute (10) nach einem oder mehreren der vorstehenden Ansprüche, **dadurch gekennzeichnet, dass** der Funktionsraum (24) Teil eines Belüftungspfades ist, der sich von einer Unterseite der Bienenbeute (10) durch den Funktionsraum (24) hindurch zu mindestens einer in der oberen Hälfte oder oberhalb des Funktionsraumes (24) angeordneten Entlüftungsöffnung erstreckt.

5. Bienenbeute (10) nach dem vorstehenden Anspruch, **dadurch gekennzeichnet, dass** die Entlüftungsöffnung mit einer für Bienen nicht durchlässigen Sperrstruktur (30) versehen ist.

6. Bienenbeute (10) nach einem oder mehreren der vorstehenden Ansprüche, **dadurch gekennzeichnet, dass**
a) der Funktionsraum (24) zumindest in einem Teilbereich mit einem Füllmaterial derart befüllt ist, dass Bienen in das Füllmaterial selbst eindringen können
und/oder
b) in dem Funktionsraum (24) oder im Bereich der Bienenbeute (10) mindestens ein sich auf den Funktionsraum (24) auswirkendes Lockmittel für Bienen und/oder Bücherskorpione angeordnet ist.

7. Bienenbeute (10) nach einem oder mehreren der vorstehenden Ansprüche, **dadurch gekennzeichnet, dass** der Aufnahmeraum (12) zur Anordnung von Wabenrähmchen ausgebildet ist und der mindestens eine Funktionsraum (24) in einem Abstand von 1-50 mm zu den Wabenrähmchen angeordnet ist.

8. Bienenbeute (10) nach einem oder mehreren der vorstehenden Ansprüche, **dadurch gekennzeichnet, dass** das Füllmaterial zumindest teilweise aus dem Funktionsraum (24) herausragend angeordnet ist.

9. Bienenbeute (10) nach dem vorstehenden Anspruch, **dadurch gekennzeichnet, dass** der Funktionsraum (24) sich zumindest in horizontaler Richtung über eine Fläche von 4 cm x 4 cm erstreckt und/oder dass in dem Funktionsraum (24) mindestens eine Begrenzungswand eine regelmäßig oder unregelmäßig profilierte Oberflächenstruktur aufweist.

10. Bienenbeute nach einem der vorstehenden Ansprüche oder nach dem Oberbegriff des Anspruchs 1, **dadurch gekennzeichnet, dass**
a) oberhalb von in dem Aufnahmeraum (12) angeordneten Bienenwaben ein für Bienen zugänglich gestalteter Funktionsraum (24) ausgebildet ist, der zumindest teilweise derart mit einem Füllmaterial befüllt ist, dass die Bienen den mit dem Füllmaterial befüllten Funktionsraum (24) zumindest teilweise durchdringen können
und/oder
b) innerhalb der Bienenbeute und/oder in einem mit der Bienenbeute verbundenen Zusatzmodul mindestens ein Lebensraum für Pseudoskorpione ausgebildet ist, welcher als Brutraum und Rückzugsort für die Pseudoskorpione konstruktiv für die Bienen aus der Bienenbeute nicht zugänglich gestaltet ist.

11. Bienenbeute nach dem vorstehenden Anspruch, **dadurch gekennzeichnet, dass** über dem oberhalb der Bienenwaben angeordneten Funktionsraum (24) (insbesondere unmittelbar angrenzend an den Funktionsraum) Trennelemente (64) derart angeordnet sind, dass zwischen den Trennelementen (64) schmale, für Bienen nicht zugängliche Spalte gebildet sind.

12. Bienenbeute nach dem vorstehenden Anspruch, **dadurch gekennzeichnet, dass** die Trennelemente (64) Holzelemente sind.

13. Bienenbeute nach einem der beiden vorstehenden Ansprüche, **dadurch gekennzeichnet, dass** die als Trennelemente (64) vorgesehenen Holzelemente zumindest teilweise aus Stirnholz bestehen, das mit seiner Faserrichtung in Richtung des Funktionsraumes (24) orientiert ist.

14. Bienenbeute nach einem der beiden vorstehenden Ansprüche, **dadurch gekennzeichnet, dass** oberhalb der Trennelemente ein für Bienen aus dem Aufnahmeraum (12) und aus einem Funktionsraum (24) nicht zugänglicher Lebensraum (66) für Bücherskorpione ausgebildet ist.

15. Zusatzmodul (34) für eine Bienenbeute (10) mit einem Aufnahmeraum (12) für Bienenwaben, wobei das Zusatzmodul (34) einen Funktionsraum (24) umfasst, der zumindest teilweise mit einem Füllmaterial derart befüllbar ist, dass das Füllmaterial in dem Funktionsraum (24) verbleibt und die Bienen dennoch Zugang zu dem mit Füllmaterial befüllbaren Bereich erhalten, wobei der Funktionsraum (24) dem Aufnahmeraum (12) zugewandt mindestens eine Zugangsöffnung für Bienen aufweist.
